# EUROPÄISCHE PATENTSCHRIFT

(11) **EP 0 956 179 B1**
(45) Veröffentlichungstag und Bekanntmachung des Hinweises auf die Patenterteilung: **23.01.2002**
(21) Anmeldenummer: 97950066.7
(22) Anmeldetag: 03.11.1997
(51) Int. Cl.: B23P 15/00, B23P 11/00, F16C 33/08

(54) **EINBAUFERTIGES GELENK SOWIE VERFAHREN UND VORRICHTUNG ZU SEINER HERSTELLUNG**
READY-TO-INSTALL JOINT AND METHOD AND DEVICE FOR PRODUCING SAME
ASSEMBLAGE ARTICULE PRET AU MONTAGE, AINSI QUE PROCEDE ET DISPOSITIF POUR SA FABRICATION

(30) Priorität: 21.12.1996 DE 19653777
(43) Veröffentlichungstag der Anmeldung: 17.11.1999
(73) Patentinhaber: KS Gleitlager GmbH, 68789 St. Leon-Rot (DE)
(72) Erfinder: LAUNAY, Oliver, D-74933 Neidenstein (DE); STORCH, Thomas, D-68782 Brühl (DE); SCHUBERT, Werner, D-69168 Wiesloch (DE)
(74) Vertreter: Dreiss, Fuhlendorf, Steimle & Becker
(86) Internationale Anmeldenummer: EP9706040
(87) Internationale Veröffentlichungsnummer: WO9828105

(56) Entgegenhaltungen:
- DE-A- 2 643 458
- DE-A- 4 309 304
- FR-A- 1 066 548
- GB-A- 1 355 623
- GB-A- 1 572 738
- US-A- 3 837 042
- US-A- 4 437 214
- US-A- 4 636 106

## Beschreibung

Es besteht oftmals die Notwendigkeit, zwei Bauteile über ein Gelenk schwenkbar miteinander zu verbinden, wobei zwischen den Teilen ein spezielles Gleitlagermaterial, insbesondere in Form eines Metall-Kunststoff-Verbundlagerwerkstoffs, beispielsweise in Form einer Lagerhülse, -buchse oder -bundbuchse. Derartige Buchsen werden dann beispielsweise in Öffnungen des einen Bauteils eingesetzt, so dass ein Zapfen, welcher beweglich oder fest mit dem anderen Bauteil verbunden ist, in das Innere der Lagerbuchse eingreifen kann. Nach Kenntnis der Anmelderin ist auch bereits der Vorschlag gemacht worden, die Innenseite einer Lageröffnung mit einem Kunststofflagermaterial auszuspritzen.

Die Herstellung bzw. der Einbau solcher Drehgelenke ist aufwendig, und es ergeben sich Probleme bei der Abdichtung der gegeneinander gleitenden Laufflächen.

Der vorliegenden Erfindung liegt daher die Aufgabe zugrunde, eine drehbar gelenkige Verbindung zwischen zwei Bauteilen zu schaffen, die einfach und kostengünstig herstellbar ist und keine Probleme hinsichtlich des Eindringens von Schmutz bereitet.

Diese Aufgabe wird durch ein einbaufertiges Gelenk aus einem Gehäusiebauteil und einem Lagerbolzen und einer zwischen Gehäusebauteil und Lagerbolzen eingesetzten Lagerbuchse gelöst, wobei das Gehäusebauteil ein Tiefziehteil ist,und dass zur axiden lagerung des lagerbolzens in das Gehäusebauteil eine Anlaufscheibe eingesetzt ist und dass die in das Gehäusebauteil eingesetzte Lagerbuchse durch Stauchen der axialen Stirnfläche in radialer Richtung derart deformiert wird, dass sie mit ihrer Umfangsfläche spielfrei gegen die Gehäusewand deformiert ist.

Das erfindungsgemäß einbaufertige Gelenk lässt sich also losgelöst von den zu verbindenden Bauteilen herstellen und braucht bei der schlussendlichen Verbindung der Bauteile lediglich in eine Werkstücköffnung des einen Bauteils eingesetzt zu werden, und der Lagerbolzen in geeigneter Weise drehfest mit dem anderen Bauteil verbunden zu werden.

Das Gehäusebauteil kann in besonders kostengünstiger Weise tiefgezogen werden, was angesichts der zylindrischen Innenfläche keine Probleme bereitet. Der Innendurchmesser des Gehäusebauteils bzw. der Außendurchmesser der Lagerbuchse sind so ausgebildet, dass die Lagerbuchse spielbehaftet, d.h. ohne dass eine Kraft aufgewendet werden müsste und ohne zu klemmen, in das Gehäusebauteil eingesetzt werden kann.

Zur Herstellung eines im wesentlichen spielfreien Gelenks wird die Lagerbuchse erfindungsgemäß durch Stauchen ihrer axialen Stirnfläche gegen die Innenseite der Gehäusewand deformiert. Hierbei könnte ansich ein Kalibrierdorn in die Lagerbuchse eingeführt sein, so dass auch ihre Innenseite auf einen ganz bestimmten Innendurchmesser deformiert bzw. kalibriert wird. Indessen erweist es sich als ganz besonders vorteilhaft, wenn vor dem Stauchen bereits der Lagerbolzen in das Gehäusebauteil eingesetzt ist, so dass die Lagerbuchse mit ihrer Innenseite gegen die zylindrische Außenfläche des Lagerbolzens deformiert wird. Es sind dann optimale spielfreie Lagerverhältnisse erreicht.

Es hat sich desweiteren als vorteilhaft erwiesen, dass zur axialen Lagerung des Lagerbolzens eine die Austrittsöffnung für die Bolzenachse umgebende Anlaufscheibe, vorzugsweise ebenfalls aus einem Metall-Kunststoff-Verbundlagerwerkstoff, vorgesehen ist. Diese Anlaufscheibe wird dann vor dem Einsetzen des Lagerbolzens in das Gehäusebauteil eingesetzt.
Zur axialen Lagerung der von der Bolzenachse abgewandten' Stirnseite des Lagerbolzens wird vorteilhafterweise eine Lagerronde, insbesondere aus einem Metall-Kunststoff-Verbundlagerwerkstoff, nach dem Stauchen der Lagerbuchse auf die Stirnseite des Bolzens aufgelegt.

Hierbei erweist es sich als vorteilhaft, wenn das Gehäusebauteil in diesem Bereich innen eine Stufe aufweist, und die Lagerronde auf dieser Stufe aufliegt und von dem freien Ende des Gehäusebauteils umbördelt ist.

Zum Abdichten der Lagerstelle kann es sich als vorteilhafterweisen, wenn im Bereich des Abschlusses des Gehäusebauteils durch die Lagerronde ein Dichtmittel verwendet wird.

Um ein Herausrutschen des Gelenks aus einer Werkstücköffnung zu verhindern, wird erfindungsgemäß vorgeschlagen, das Gehäusebauteil mit einem nach außen kragenden flanschförmigen Abschnitt auszubilden, mit dem das Gelenk abstützbar ist.

Mit der Erfindung wird gleichermaßen ein Verfahren sowie eine Vorrichtung zum Herstellen eines einbaufertigen Gelenks der vorstehend beschriebenen Art mit den Merkmalen der unabhängigen Ansprüche 8 und 12 bereitgestellt.

Weitere Merkmale, Einzelheiten und Vorteile der Erfindung ergeben sich aus den beigefügten Ansprüchen sowie der zeichnerischen Darstellung und nachfolgenden Beschreibung einer bevorzugten Ausführungsform des erfindungsgemäßen Gelenks sowie des Verfahrens und der Vorrichtung zu seiner Herstellung. In der Zeichnung zeigt:
- Figuren 1 und 2: aufeinanderfolgende Schritte bei der Herstellung eines erfindungsgemäßen Gelenks;

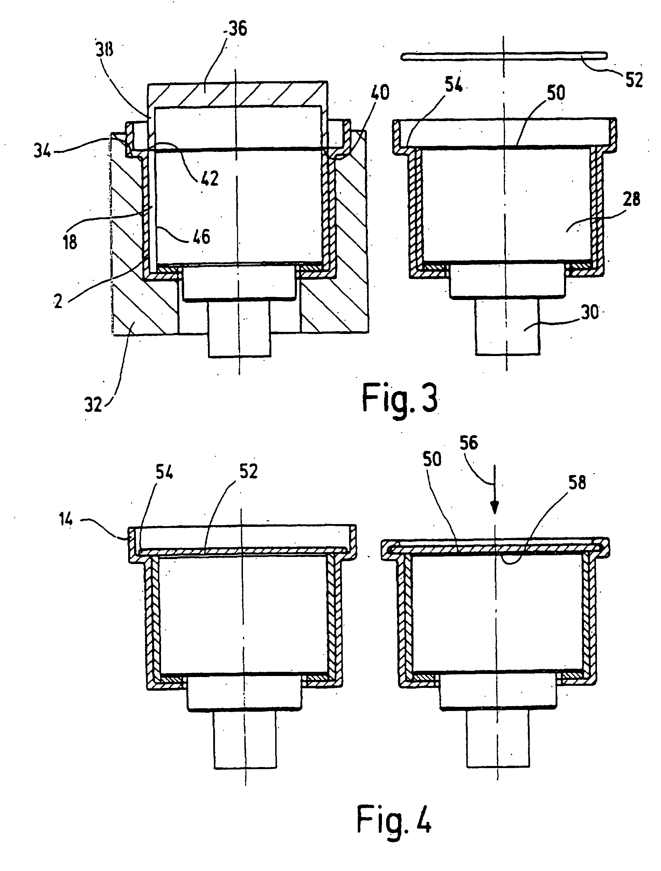

- Figur 3: eine Schnittansicht, des Presswerkzeugs beim Herstellungsschritt des Stauchens der Lagerbuchse sowie unmittelbar danach;
- Figur 4: eine Schnittansicht des Gelenks vor und nach dem Verschließen des Gehäusebauteils; und
- Figur 5: eine vergrößerte Schliffbildansicht eines erfindungsgemäßen Gelenks im Bereich der Lagerbuchse und Anlaufscheibe aus einem Stahl-Kunststoff-Verbundgleitlagerwerkstoff.

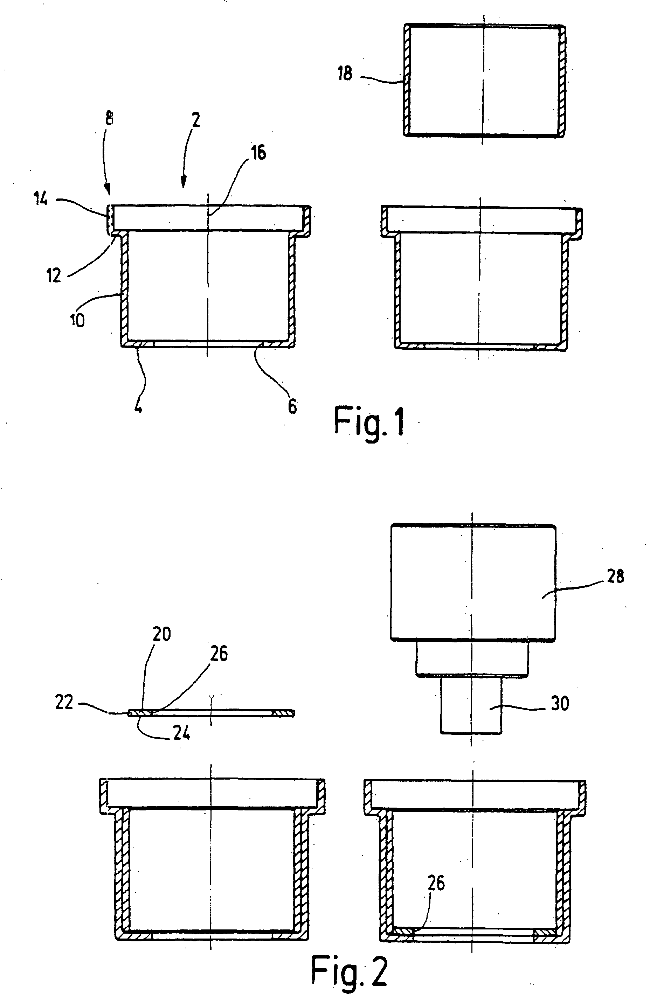

Figur 1 zeigt ein in einem ersten Verfahrensschritt tiefgezogenes Gehäusebauteil 2, welches in einem Bodenbereich 4 eine rotationssymmetrische und konzentrisch zur Längsmittelachse ausgebildete Öffnung 6 aufweist. Das Gehäusebauteil 2 weist vom Bodenbereich 4 in Richtung auf sein freies Ende 8 einen zylindermantelförmigen Abschnitt 10 auf, der in eine Stufe 12 übergeht, welche nach Fertigstellung des Gelenks eine Anschlagsfläche bildet und das Gelenk auf diese Weise gegen Herausrutschen aus einer Werkstücköffnung sichert. Nach dem Tiefziehen ist der sich an die Stufe 12 anschließende Abschnitt 14 des Gehäusebauteils 2 zylindermantelförmig und ebenfalls konzentrisch zur Längsmittelachse 16 des Gehäusebauteils 2.

Sodann wird eine zylindrische Gleitlagerbuchse 18 aus einem Stahl-Kunststoff-Verbundlagerwerkstoff konzentrisch zum Abschnitt 10 in das Gehäusebauteil 2 eingesetzt.

Wie aus Figur 2 zu erkennen ist, wird hiernach eine, insbesondere aus dem gleichen Material bestehende Anlaufscheibe 20 auf den Bodenbereich 4 des Gehäusebauteils 2 aufgelegt, so dass die radial äußere Umfangsfläche 22 der Anlaufscheibe 20 der Innenseite der Lagerbuchse 18 zugewandt ist, und die Anlaufscheibe 20 mit ihrem Metallrücken 24 gegen die Innenseite des Bodenbereichs 4 anliegt. Die radial innere Seite 26 der Anlaufscheibe 20 verläuft im eingesetzten Zustand vorzugsweise flächenbündig mit der Innenseite der Öffnung 6.

Alternativ hierzu wäre es jedoch auch denkbar, vor dem Einsetzen der Lagerbuchse 18 eine bis zur Innenseite des Gehäusebauteils 2 erstreckte Anlaufscheibe vorzusehen, so dass die Lagerbuchse 18 mit ihrer Stirnseite auf der Anlaufscheibe 20 aufliegt - Hiernach wird ein Lagerbolzen 28 in das Gehäusebauteil 2 eingesetzt, so dass ein Bolzenachszapfen 30 die Öffnung 6 des Gehäusebauteils 2 durchgreift und nach außen vorsteht.

Das Gehäusebauteil 2 mit Lagerbolzen 28 wird nun in ein Press- oder Kalibrierwerkzeugunterteil 32 eingesetzt, wobei sich die Stufe 12 des Gehäusebauteils 2 auf einer an entsprechender Stelle an dem Werkzeugunterteil 32 vorgesehenen Stufe 34 abstützt. Sodann wird ein Presswerkzeugoberteil 36, das einen zylindermantelförmigen Abschnitt 38 aufweist, dessen Wanddicke geringfügigst dünner als die Wanddicke der Lagerbuchse 18 ist, mit den freien Stirnseiten 40 des Zylindermantelförmigen Abschnitts 38 gegen die freien Stirnseiten 42 der Lagerbuchse 18 gelegt. Es wird dann das Presswerkzeugunterteil 32 und das Oberteil 36 aufeinander zu bewegt und dabei die Lagerbuchse 18 in axialer Richtung gestaucht. Hierbei wird die widerstandslos und geringfügigst spielbehaftet in das Gehäusebauteil 2 eingesetzte Lagerbuchse in radialer Richtung derart deformiere, dass sich die Außenseite der Lagerbuchse 18 spielfrei an die Innenseite des Abschnitts 10 des Gehäusebauteils 2 anlegt. Ebenso wird die Innenseite 46 der Lagerbuchse 18 gegen die Umfangsfläche des Lagerbolzens 28 deformiert. Hierbei werden Fertigungstoleranzen optimal ausgeglichen, und es ergibt sich ein spielfreies Aneinanderanliegen der gegeneinander gleitenden Bauteile, nämlich Lagerbuchse 18 und Lagerbolzen 28.

Durch Variieren der Kraft, mit der die Presswerkzeugteile 32 und 36 gegeneinander bewegt werden, lässt sich eine Leicht- oder Schwergängigkeit des Gelenks einstellen. Werden die Teile mit geringer Kraft gegeneinander gedrückt, so lässt sich zwar eine spielfreie Lagerung erreichen sowie ein unbeweglicher Presssitz der Lagerbuchse 18 in dem Gehäusebauteil 2, der Lagerbolzen 28 lässt sich aber verhältnismäßig leicht gegenüber der Lagerbuchse 18 Verdrehen.

Zur axialen Lagerung der vom Lagerbolzenachszapfen 30 abgewandten freien Stirnseite 50 des Lagerbolzens 28 wird das offene Ende des Gehäusebauteils 2 mit einer Lagerronde 52 vorzugsweise ebenfalls aus einem Stahl-Kunststoff-Verbundlagerwerkstoff abgeschlossen. Die Lagerronde 52 stützt sich auf einer der äußeren Stufe 12 des Gehäusebauteils 2 entsprechenden inneren Stufe 54 ab. Schließlich wird der konzentrische Zylindermantelabschnitt 14 des Gehäusebauteils 2 nach innen verformt, so dass die Lagerronde 52 umbördelt wird. Es kann sich noch als vorteilhaft erweisen, wenn auf den außenliegenden Rücken der Lagerronde 52 eine plastisch verformende Kraft in Richtung des Pfeils 56 eingeleitet wird, wenn die Lagerronde 52 durch Umbördeln mit dem Abschnitt 14 fixiert wird, um eine spielfreie Anlage einer Gleitlagerschicht 58 der Lagerronde 52 gegen die Stirnseite 50 des Lagerbolzens 28 sicherzustellen.

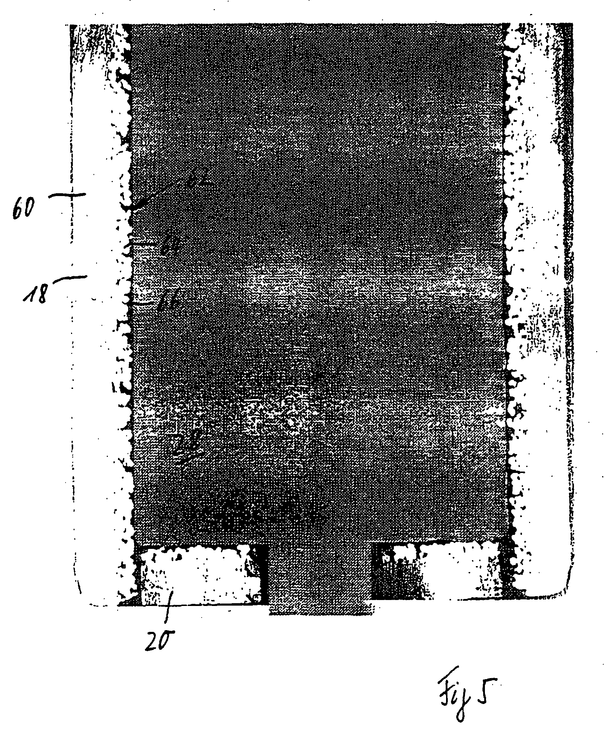

Schließlich zeigt Figur 5 ein Schliffbild der geschnittenen Lagerbuchse 18 und Anlaufscheibe 20 sowie des Lagerzapfens 28 nach dem axialen Stauchen der Lagerbuchse 18. Im Schliffbild erkennt man einen Stahlrücken 60, der gegen die Innenseite des Gehäusebauteils 2 anliegend deformiert ist und eine Gleitschicht 62 aus einer porösen.Trägerschicht 64, in deren Poren ein auf- Kunststoffbasis aufgebautes, insbesondere PTFE enthaltendes Gleitlagermaterial 66 eingelagert ist. Bei der porösen Trägerschicht handelt es sich vorzugsweise um eine aufgesinterte Blei-Bronze-Schicht.

Bemerkenswerterweise wird der Aufbau des Metall-Kunststoff-Verbundwerkstoffs der Lagerbuchse 18 durch axiales Stauchen der Lagerbuchse 18 nicht verändert bzw. gestört, wie aus der Figur 5 ersichtlich ist.

## Patentansprüche

1. Einbaufertiges Gelenk aus einem Gehäusebauteil (2) und einem Lagerbolzen (28) und einer zwischen Gehäusebauteil (2) und Lagerbolzen (28) eingesetzten Lagerbuchse (18),
**dadurch gekennzeichnet, dass** das Gehäusebauteil (2) ein Tiefziehteil ist, und dass zur axialen Lagerung des Lagerbolzens (28) in das Gehäusebauteil eine Anläufscheibe (20) eingesetzt ist und dass die in das Gehäusebauteil (2) eingesetzte Lagerbuchse (18) durch Stauchen der axialen Stirnfläche (42) in radialer Richtung derart deformiert wird, dass sie mit ihrer Umfangsfläche spielfrei gegen die Gehäusewand deformiert ist.

2. Gelenk nach Anspruch 1, **dadurch gekennzeichnet, dass** die Lagerbuchse (18) mit ihrer Innenfläche spielfrei gegen den Lagerbolzen (28) deformiert ist.

3. Gelenk nach Anspruch 1 oder 2, **dadurch gekennzeichnet, dass** die Anlaufscheibe (20) zur axialen Lagerung des Lagerbolzens (28) eine Austrittsöffnung (6) für die Bolzenachse (30) umgibt.

4. Gelenk nach Anspruch 1, 2 oder 3, **dadurch gekennzeichnet, dass** zur axialen Lagerung einer Stirnseite (50) des Lagerbolzens (28) eine Lagerronde (52) vorgesehen ist.

5. Gelenk nach Anspruch 4, **dadurch gekennzeichnet, dass** die Lagerronde (52) auf einer Stufe (54) des Gehäusebauteils (2) aufliegt und von dem freien Ende des Gehäusebauteils umbördelt ist.

6. Gelenk nach einem der vorstehenden Ansprüche, **dadurch gekennzeichnet, dass** ein Dichtmittel zum Abdichten des Gehäusebauteils vorgesehen, insbesondere eingespritzt ist.

7. Gelenk nach einem der vorstehenden Ansprüche, **dadurch gekennzeichnet, dass** das Gehäusebauteil (2) einen nach außen kragenden flanschförmigen Abschnitt (12) aufweist, mit dem es im eingesetzten Zustand in einer Werkst-ücköffnung gegen Herausrutschen sicherbar ist.

8. Verfahren zum Herstellen eines einbaufertigen Gelenks aus einem Gehäusebauteil und einem Lagerbolzen und einer zwischen Gehäusebauteil und Lagerbolzen eingesetzten Lagerbuchse, **gekennzeichnet durch** folgende Verfahrensschritte:
- Herstellen eines Gehäusebauteils (2) **durch** Tiefziehen, wobei ein nach innen gezogener Bodenabschnitt (4) gebildet wird, der eine Durchgangsöffnung (6) für die Achse des Lagerbolzens (28) begrenzt;
- Einsetzen einer Anlaufscheibe in das tiefgezogene Gehäusebauteil (2) zur axialen Lagerung des Lagerbolzens (28) ;
- Einsetzen der zylindrischen Lägerbuchse (18), so dass sich eine Stirnseite der Lagerbuchse an der Anlaufscheibe abstützt;
- Einsetzen des Lagerbolzens (28) in die Lagerbuchse (18) bzw. das Gehäusebauteil (2);
- axiales Stauchen der vom Bodenabschnitt (4) abgewandten freien Stirnseite (42) der Lagerbuchse (18), so dass diese in radialer Richtung gegen die Gehäusewand und gegen den Lagerbolzen (28) deformiert wird.
- Verschließen des Gehäusebauteils (2) auf der von der Lagerbolzenachse (30) abgewandten Seite.

9. Verfahren nach Anspruch, **dadurch gekennzeichnet, dass** zur axialen Lagerung der Stirnseite (50) des Lagerbolzens (28) eine Lagerronde (52) eingesetzt wird.

10. Verfahren nach Anspruch 8 oder 9, **dadurch gekennzeichnet, dass** zum Verschließen des Gehäusebauteils (2) die Lagerronde (52) von dem freien Ende des Gehäusebauteils (2) umbördelt wird.

## Claims

1. Ready-to-install joint comprising a housing component (2) and a bearing journal (28) and a bearing bush (18) inserted between housing component (2) and bearing journal (28), **characterised in that** the housing component (2) is a deep-drawn part, and **in that** a thrust ring (20) is used for axial mounting of the bearing journal (28) in the housing component, and **in that** the bearing bush (18) inserted in the housing component (2) is shaped in the radial direction by compressing the axial end face (42) in such a way that it is deformed with its peripheral face against the housing wall without play.

2. Joint according to claim 1, **characterised in that** the bearing bush (18) is deformed with its inner face against the bearing journal (28) without play.

3. Joint according to claim 1 or 2, **characterised in that** the thrust ring (20) for axial mounting of the bearing journal (28) surrounds an outlet aperture (6) for the pin axis (30).

4. Joint according to claim 1, 2 or 3, **characterised in that** a round bearing plate (52) is provided for the axial mounting of an end face (50) of the bearing journal (28).

5. Joint according to claim 4, **characterised in that** the round bearing plate (52) rests on a step (54) of the housing component (2) and is bordered by the free end of the housing component.

6. Joint according to one of the preceding claims, **characterised in that** a seal for sealing the housing component is provided, in particular injected.

7. Joint according to one of the preceding claims, **characterised in that** the housing component (2) has a flangeshaped portion (12) projecting outwards with which it can be prevented from slipping out when inserted in a workpiece aperture.

8. Process for producing a ready-to-install joint comprising a housing component and a bearing journal and a bearing bush inserted between housing component and bearing journal, **characterised by** the following process steps:
- producing a housing component (2) by deep-drawn, a base portion (4) drawn inwards being formed, which delimits a through aperture (6) for the axis of the bearing journal (28);
- inserting a thrust ring into the deep drawn housing component (2) for the axial mounting of the bearing journal (28);
- inserting the cylindrical bearing bush (18), so an end face of the bearing bush is supported on the thrust ring;
- inserting the bearing journal (28) into the bearing bush (18) or the housing component (2);
- axial compressing of the free end face (42) of the bearing bush (18) remote from the base portion (4), so the end face is deformed in the radial direction against the housing wall and against the bearing journal (28);
- sealing the housing component (2) on the side remote from the bearing journal axis (30).

9. Process according to claim, **characterised in that** a round bearing plate (52) is used for axial mounting of the end face (50) of the bearing journal (28).

10. Process according to claim 8 or 9, **characterised in that** the round bearing plate (52) is bordered by the free end of the housing component (2) to seal the housing component (2).

## Revendications

1. Assemblage articulé prêt au montage comprenant un élément de boîtier (2) et un boulon de palier (28) ainsi qu'un coussinet (18) inséré entre l'élément de boîtier (2) et le boulon de palier (28), **caractérisé en ce que** l'élément de boîtier (2) est une pièce emboutie et qu'un disque de démarrage (20) est mis en place dans l'élément de boîtier (2) permettant le logement axial du boulon de palier (28) et que le coussinet (18) inséré dans l'élément de boîtier (2) est déformé dans le sens radial par refoulement de la face axiale (42), de telle sorte que sa surface circonférentielle est déformée sans jeu contre la paroi du boîtier.

2. Assemblage articulé selon la revendication 1, **caractérisé en ce que** la face intérieure du coussinet (18) est déformée sans jeu contre le boulon de palier (28).

3. Assemblage articulé selon la revendication 1 ou 2, **caractérisé en ce que** le disque de démarrage (20) entoure une ouverture de sortie (6) pour l'axe de boulon (30), afin de permettre le logement axial du boulon de palier (28).

4. Assemblage articulé selon la revendication 1, 2 ou 3 **caractérisé en ce qu'**un rond de palier (52) est prévu pour le logement axial d'une face frontale (50) du boulon de palier (28).

5. Assemblage articulé selon la revendication 4, **caractérisé en ce que** le rond de palier (52) est en appui sur un palier (54) de l'élément de boîtier (2) et est bordé par l'extrémité libre de l'élément de boîtier (2).

6. Assemblage articulé selon l'une des revendications précédentes, **caractérisé en ce qu'**un produit d'étanchéité est prévu, notamment par injection, pour étancher l'élément de boîtier.

7. Assemblage articulé selon l'une des revendications précédentes, **caractérisé en ce que** l'élément de boîtier (2) présente une section sous forme de flasque (12) en saillie vers l'extérieur permettant d'éviter sa sortie lorsqu'il est mis en place dans une ouverture de pièce.

8. Procédé de fabrication d'un assemblage articulé prêt au montage comprenant un élément de boîtier et un boulon de palier ainsi qu'un coussinet inséré entre l'élément de bottier (2) et le boulon de palier **caractérisé par** les étapes de production suivantes :
- fabrication d'un élément de boîtier (2) par emboutissage en formant une section de fond (4) tirée vers l'intérieur qui délimite une ouverture de passage (6) pour l'axe du boulon de palier (28) ;
- mise en place d'un disque de démarrage dans l'élément de boîtier (2) embouti permettant le logement axial du boulon de palier (28) ;
- mise en place du coussinet cylindrique (18) de manière à ce qu'une face frontale du coussinet s'appuie sur le disque de démarrage ;
- mise en place du boulon de palier (28) dans le coussinet (18) respectivement l'élément de boîtier (2);
- refoulement axial de la face frontale libre (42) du coussinet (18) opposée à la section de fond (4) afin que ledit coussinet soit déformé dans le sens radial contre la paroi de boîtier et contre le boulon de palier (28) ;
- fermeture de l'élément de boîtier (2) sur la face opposée à l'axe du boulon de palier (28).

9. Procédé selon la revendication, **caractérisé en ce qu'**un rond de palier (52) est mis en place pour assurer le logement axial de la face frontale (50) du boulon de palier (28).

10. Procédé selon la revendication 8 ou 9, **caractérisé en ce que** le rond de palier (52) est bordé par l'extrémité libre de l'élément de boîtier (2) afin de fermer l'élément de boîtier (2).
